# EUROPÄISCHE PATENTANMELDUNG

(11) **EP 4 152 573 A1**
(43) Veröffentlichungstag der Anmeldung: **22.03.2023**
(21) Anmeldenummer: 22188226.9
(22) Anmeldetag: 02.08.2022
(51) Int. Cl.: H02K 5/20, H02K 11/33, H02K 7/00

(54) **GEHÄUSE EINES E-ACHSEN-MODULS**

(30) Priorität: 15.09.2021 DE 102021210190
(71) Anmelder: Robert Bosch GmbH, 70442 Stuttgart (DE)
(72) Erfinder: Kuehnemund, Martin, 70499 Stuttgart (DE); Boettinger, Theresa Sophia, 70180 Stuttgart (DE); Mueller, Thomas, 73240 Wendlingen (DE); Kanzleiter, Tim, 69123 Heidelberg (DE); Haiser, Heinz-Bernd, 71638 Ludwigsburg (DE); Feigl, Markus, 71706 Markgroeningen (DE)

(57) **Zusammenfassung**

Die Erfindung bezieht sich auf ein Gehäuse (12) eines E-Achsen-Moduls (10) eines elektrisch angetriebenen Fahrzeugs, wobei das E-Achsen-Modul (10) eine elektrische Maschine (14) und eine Leistungselektronik (24) umfasst, die über einen Kühlkreislauf gekühlt sind. Das Gehäuse (12) umfasst eine integrierte Kühlleitung (40), über welche ein Kühlmedium zwischen dem Gehäuse (12) und der Leistungselektronik (24) zirkuliert. Ferner bezieht sich die Erfindung auf die Verwendung des Gehäuses (12) in einem E-Achsen-Modul (10) eines elektrisch angetriebenen Fahrzeugs.

## Beschreibung

### Technisches Gebiet

Die Erfindung bezieht sich auf ein Gehäuse eines E-Achsen-Moduls eines elektrisch angetriebenen Fahrzeugs, wobei das E-Achsen-Modul eine elektrische Maschine und eine Leistungselektronik umfasst, die über einen Kühlkreislauf gekühlt sind. Des Weiteren bezieht sich die Erfindung auf die Verwendung des Gehäuses im E-Achsen-Modul eines elektrisch angetriebenen Fahrzeugs.

### Stand der Technik

DE 10 2008 001 621 A1 bezieht sich auf eine elektrische Maschine mit einer integrierten Gehäusekühlung. Die elektrische Maschine umfasst ein mindestens eine Gehäusewand aufweisendes Gehäuse. In dem Gehäuse ist mindestens eine elektrische Baugruppe aufgenommen. Ferner ist eine Kühleinrichtung vorgesehen, die mindestens eine Kühlmittelsprüheinrichtung zum Besprühen der elektrischen Baugruppe mit Kühlmittel aufweist. Es ist vorgesehen, dass die Kühleinrichtung zur Gehäusekühlung mindestens einen in der Gehäusewand verlaufenden Gehäusekühlmittelkanal für das Kühlmittel aufweist.

DE 10 2011 076 525 A1 bezieht sich auf einen elektrischen Fahrantrieb für ein Fahrzeug. Es wird ein elektrischer Fahrantrieb für ein Fahrzeug mit zumindest einer elektrischen Maschine und einem mit der elektrischen Maschine gekoppelten Getriebe offenbart, die in einem gemeinsamen Gehäuse angeordnet sind. Ein gemeinsamer Kühl- und/oder Schmierkreislauf ist für die elektrische Maschine und das Getriebe vorgesehen. Der Kühl- und/oder Schmiermittelkreislauf umfasst zumindest einen Kühlkörper an der elektrischen Maschine und zumindest einen Verteilungskörper zum Verteilen des Kühl- und/oder Schmiermediums in dem Gehäuse.

Heutzutage werden die Komponenten Leistungselektronik einerseits und elektrische Maschine andererseits eines E-Achsen-Moduls über ein und denselben Kühlkreislauf gekühlt. Dazu ist eine Verbindung in Gestalt einer Kühlleitung zwischen der Leistungselektronik und der elektrischen Maschine erforderlich. Diese Kühlleitung wird in der Regel durch zusätzliche Anbauteile an der Außenseite des Gehäuses realisiert. So wird beispielsweise in einen Anschlussstutzen an der Leistungselektronik eine Dichtbuchse eingesteckt. Auf der gegenüberliegenden Seite der Dichtbuchse wird eine Thermoplastkunststoffleitung in diese eingeschoben. Am unteren Ende der Thermoplastkunststoffleitung ist diese mit einem O-Ring versehen, der, sobald das untere Ende der Kunststoffleitung im Gehäuse der elektrischen Maschine montiert wurde, das Kühlsystem abdichtet. Des Weiteren ist besagte Kunststoffleitung mit mindestens zwei Befestigungselementen, in der Regel Schrauben, am Gehäuse befestigt.

Die Realisierung einer an der Außenseite des Gehäuses angebrachten Kühlfluidleitung stellt einerseits einen zusätzlichen Montageaufwand dar, andererseits wird dadurch die Varianz hinsichtlich der Einbaumöglichkeiten beschränkt.

### Darstellung der Erfindung

Erfindungsgemäß wird ein Gehäuse eines E-Achsen-Moduls eines elektrisch angetriebenen Fahrzeugs vorgeschlagen, wobei das E-Achsen-Modul eine elektrische Maschine und eine Leistungselektronik umfasst, die über einen Kühlkreislauf gekühlt sind, und das Gehäuse eine integrierte Kühlleitung aufweist, über welche ein Kühlmedium zwischen dem Gehäuse und der Leistungselektronik zirkuliert.

In vorteilhafter Ausgestaltung des erfindungsgemäß vorgeschlagenen Gehäuses verläuft die integrierte Kühlleitung aus einer Gehäusewand des Gehäuses zu einem Anschlussende, welches Teil des Gehäuses ist, welches sich unterhalb der Leistungselektronik befindet.

Beim erfindungsgemäß vorgeschlagenen Gehäuse ist das Anschlussende topfförmig ausgeführt und von einer Wandung begrenzt, die einen stutzenartigen Einsatz aufnimmt. Da das Anschlussende in vorteilhafter Weise unterhalb der Leistungselektronik liegt und insbesondere mit dieser in Verbindung steht, sind keine zusätzlichen Befestigungs- und Abdichtungselemente erforderlich.

In einer weiteren vorteilhaften Ausgestaltung des erfindungsgemäß vorgeschlagenen Gehäuses ist der Einsatz als Stutzen ausgeführt, dessen Stirnseite in einen Bodenbereich eines Gehäuses der Leistungselektronik hineinragt. Bei entsprechender Fertigungsgüte kann dadurch, ohne dass weitere Abdicht- und Befestigungselemente erforderlich werden, eine zuverlässige Abdichtung erreicht werden.

In weiterer vorteilhafter Ausgestaltung des erfindungsgemäß vorgeschlagenen Gehäuses weist der Einsatz eine umlaufend ausgebildete Nut auf, in welcher ein Dichtring aufgenommen ist. Dadurch lässt sich der Einsatz, der am Anschlussende der integrierten Kühlleitung ausgebildet ist, gegen die Wandung des Anschlussendes mit einem Bauteil abdichten. In der Einbaugeometrie sind keine weiteren Befestigungselemente mehr erforderlich.

In einer weiteren vorteilhaften Ausgestaltung des erfindungsgemäß vorgeschlagenen Gehäuses ist der Bodenbereich eines Gehäuses, welches der Aufnahme der Leistungselektronik dient, mit einem Hohlraum versehen, durch den das Kühlmedium zirkuliert. Durch das über die integrierte Kühlleitung im Bodenbereich des Gehäuses der Leistungselektronik zugeführte Kühlmedium kann die Abwärme relativ großflächig über den Bodenbereich des Gehäuses der Leistungselektronik abgezogen werden.

In vorteilhafter Weiterbildung des erfindungsgemäß vorgeschlagenen Gehäuses ist schließlich vorgesehen, dass das Anschlussende der integrierten Kühlleitung den Bodenbereich des Gehäuses der Leistungselektronik abstützt.

Weiterhin bezieht sich die Erfindung auf die Verwendung des Gehäuses im E-Achsen-Modul eines elektrisch angetriebenen Fahrzeugs.

### Vorteile der Erfindung

Durch die erfindungsgemäß vorgeschlagene integrierte Kühlleitung, die vom Gehäuse der elektrischen Maschine aus einer Gehäusewand abzweigt und sich bis zum Bodenbereich des Gehäuses, in dem die Leistungselektronik aufgenommen ist, erstreckt, kann ein kurzer Weg für das Kühlmedium realisiert werden, ohne dass Anbaukomponenten, wie Befestigungsflansche, Schrauben, Gewindebohrungen und eine Dichtbuchse, erforderlich sind. Die aufgezählten Komponenten sind bei der erfindungsgemäß vorgeschlagenen integrierten Kühlleitung entbehrlich, wodurch der Montageaufwand drastisch reduziert wird.

Der Einsatz der erfindungsgemäß vorgeschlagenen Lösung hinsichtlich des Vorsehens der integrierten Kühlleitung zwischen dem Gehäuse der elektrischen Maschine einerseits und dem Gehäuse der Leistungselektronik andererseits erfordert erheblich weniger Bauteile zur Realisierung des Kühlkreislaufs. Des Weiteren ist der erforderliche Fertigungs- und Montageaufwand erheblich herabgesetzt, da insgesamt gesehen weniger Bauelemente Verwendung finden. Dadurch ergibt sich eine wesentlich kostengünstigere Fertigung und Montage, die zudem schneller ablaufen kann.

Ein weiterer vorteilhafter Aspekt der erfindungsgemäß vorgeschlagenen Integration der Kühlleitung in das Gehäuse der elektrischen Maschine des E-Achsen-Moduls ist darin zu sehen, dass die erfindungsgemäß vorgeschlagene Lösung aufgrund eines Verzichts auf eine externe Leitungs- und Anbaulösung wesentlich platzsparender ist. Dadurch können die Einbauverhältnisse in idealer Weise verbessert werden, da das E-Achsen-Modul insgesamt gesehen kompakter baut, was die Einbauvarianz beim Endkunden wiederum erhöht.

Die integrierte Kühlleistung kann beim urformenden Fertigungsverfahren bei der Herstellung des Gehäuses beispielsweise durch einen im Gusswerkzeug für das Gehäuse der elektrischen Maschine integrierten Schieber direkt beim Gießen erzeugt werden. Des Weiteren besteht die Möglichkeit, die integrierte Kühlleitung in der Gehäusewand des Gehäuses der elektrischen Maschine des E-Achsen-Moduls durch ein spanabhebendes Fertigungsverfahren, wie beispielsweise Bohren oder Fräsen, herzustellen. Über beide Fertigungsmöglichkeiten kann der Verzicht auf die externe Leitungsführung an der Außenseite des Gehäuses der elektrischen Maschine erreicht werden.

### Kurze Beschreibung der Zeichnungen

Ausführungsformen der Erfindung werden anhand der Zeichnungen und der nachfolgenden Beschreibung näher erläutert.

Es zeigen:
- Figur 1: die Ansicht eines Gehäuses einer elektrischen Maschine mit konventioneller, externer Leitungsführung einer Kühlleitung,
- Figur 2: eine Seitenansicht der externen Kühlleitungsführung gemäß der Darstellung in Figur 1,
- Figur 3: ein erfindungsgemäßes Ausführungsbeispiel einer in das Gehäuse integrierten Kühlleitung und
- Figur 4: eine Schnittdarstellung der in Figur 3 perspektivisch dargestellten erfindungsgemäßen integrierten Kühlleitung am Gehäuse der elektrischen Maschine.

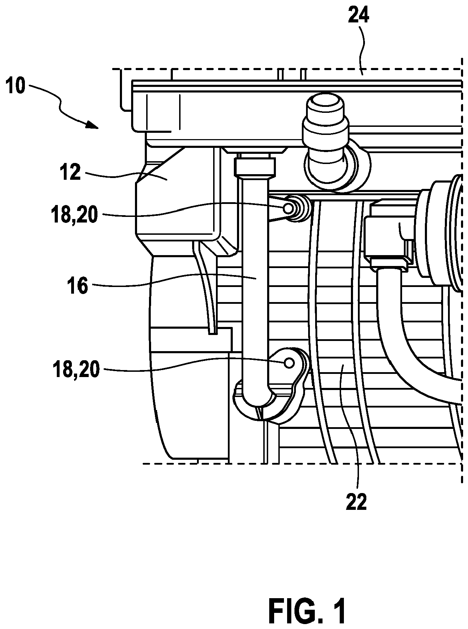

Figur 1 zeigt die Darstellung einer konventionell an der Außenseite eines Gehäuses 12 eines E-Achsen-Moduls 10 geführten Kunststoffleitung 16. Diese ist mit einzelnen in axiale Richtung voneinander beabstandeten Befestigungsflanschen 18 versehen. Den Positionen der Befestigungsflanschen 18 an der Kunststoffleitung 16 sind Gewindebohrungen 20 in einer Gehäusewand 22 des Gehäuses 12 zur externen Befestigung zugeordnet. Oberhalb des Gehäuses 12 des E-Achsen-Moduls 10 befindet sich ein Gehäuse einer Leistungselektronik 24, die auch als Inverter bezeichnet wird.

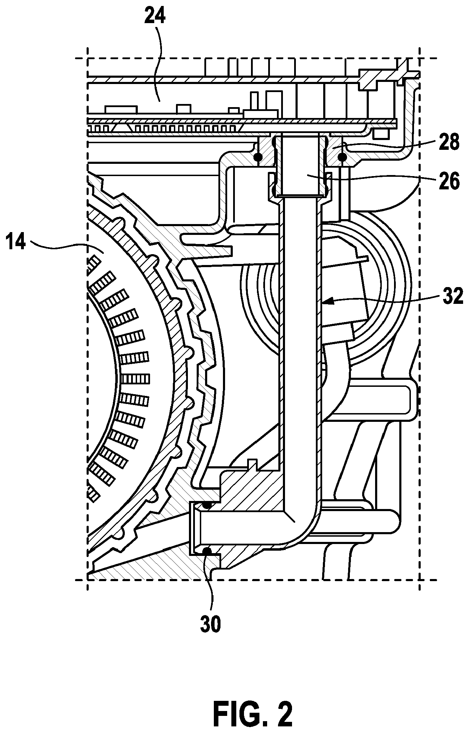

Figur 2 zeigt eine Seitenansicht der in Figur 1 extern am Gehäuse 12 geführten Kunststoffleitung 16. Aus der teilweise geschnittenen Darstellung der Kunststoffleitung 16 gemäß Figur 2 geht hervor, dass diese an ihrem unterhalb der Leistungselektronik 24 liegenden Ende eine Dichtbuchse 26 aufnimmt. Die Dichtbuchse 26 ist einerseits gegen die Kunststoffleitung 16 und andererseits gegen einen Stutzen 28 abgedichtet. Der Stutzen 28 ragt in die Leistungselektronik 24 hinein. Figur 2 ist zu entnehmen, dass sich ein externer Leitungsverlauf 32 der Kunststoffleitung 16 vom Gehäuse 12 zum Gehäuse der Leistungselektronik 24 ergibt. Der Vollständigkeit halber sei erwähnt, dass am unteren Ende der Kunststoffleitung 16 ein O-Ring Verwendung findet, der als Dichtelement fungiert.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

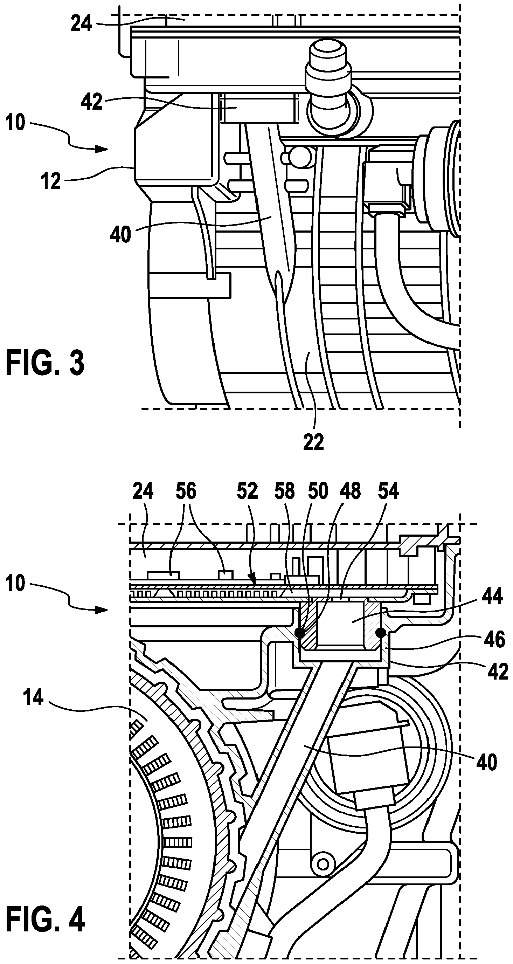

Figur 3 zeigt ein Ausführungsbeispiel einer in das Gehäuse 12 beziehungsweise eine Gehäusewand 22 integrierten Kühlleitung 40.

Aus Figur 3 geht hervor, dass die integrierte Kühlleitung 40 aus der Gehäusewand 22 des Gehäuses 12 abzweigt und sich in einem Schrägungswinkel im Wesentlichen in vertikale Richtung erstreckt und in einem Anschlussende 42 mündet. Das Anschlussende 42 befindet sich als Teil der Gehäusewand 22 des Gehäuses 12 unterhalb eines Gehäuses der Leistungselektronik 24.

Wie aus der Schnittdarstellung gemäß Figur 4 hervorgeht, verläuft die integrierte Kühlleitung 40 ausgehend vom Kühlmantel, der die elektrische Maschine 14 des E-Achsen-Moduls umgibt, in einem Schrägungswinkel bis zum Anschlussende 42. Das Anschlussende 42 ist Teil des Gehäuses 12 beziehungsweise der Gehäusewand 22 und ist unterhalb der Leistungselektronik 24 positioniert. Das Anschlussende 42 umfasst eine Wandung 46, die einen topfförmigen Hohlraum bildet. In diesen ist ein Einsatz 44, bevorzugt in Stutzenform ausgebildet, eingelassen. Am Außenumfang des Einsatzes 44 ist mindestens eine Umlaufnut 48 vorgesehen. In diese ist ein Dichtring 50 eingelassen. Der Dichtring 50 dichtet am Anschlussende 42 den Einsatz 44 gegen die Innenseite der Wandung 46 des Anschlussendes 42 ab.

Wie aus der Schnittdarstellung gemäß Figur 4 des Weiteren hervorgeht, ragt eine Stirnseite des im Anschlussende 42 aufgenommenen Einsatzes 44 in eine komplementär zur Geometrie des Einsatzes 44 ausgebildete Öffnung im Bodenbereich 52 eines Gehäuses der Leistungselektronik 24 hinein, ohne dass es eines weiteren Abdichtelements bedürfte. Dadurch ergibt sich eine fluidische Verbindung zwischen der integrierten Kühlleitung 40 ausgehend vom Kühlmantel der elektrischen Maschine 14 über den Einsatz 44, eingelassen in das Anschlussende 42 und einem Hohlraum 58, der im Bodenbereich 52 des Gehäuses der Leistungselektronik 24 vorgesehen ist. Das relativ flach bauende Gehäuse der Leistungselektronik 24 ist so beschaffen, dass sich auf der Oberseite des Bodenbereichs 52 die Halbleiterbauelemente befinden. Da der Bodenbereich 52 mit einem Hohlraum 58 versehen ist, durch den das aus einer Überströmöffnung 54 des Einsatzes 44 austretende Kühlmedium im Hohlraum 58 zirkuliert, kann die Abwärme von Bauelementen 56 der Leistungselektronik 24 wirkungsvoll und großflächig abtransportiert werden. Wie aus der Darstellung gemäß Figur 4 hervorgeht, zweigt die integrierte Kühlleitung 40 aus der Gehäusewand 22 des Gehäuses 12 ab, ist mithin Teil der Gehäusewand 22. Dadurch entfällt das Erfordernis eines Dichtelements, beispielsweise eines Dichtrings, zum Abdichten des unteren Endes der integrierten Kühlleitung 40. Am oberen Ende der integrierten Kühlleitung 40 im Bereich des Anschlussendes 42 entfallen Befestigungselemente, Gewindebohrungen, Schrauben und insbesondere die Dichtbuchse 26, wie sie bei der Lösung gemäß Figur 2 erforderlich wären. Die integrierte Kühlleitung 40 mündet unmittelbar in das Anschlussende 42, in welches der stutzenförmige Einsatz 44 eingelassen ist. Es ist mithin lediglich ein Dichtring 50 erforderlich, mit welchem der stutzenartig ausgebildete Einsatz 44 gegen die Innenseite der Wandung 46 des Anschlussendes 42 abzudichten ist. Befestigungselemente und weitere Abdichtelemente entfallen, so dass sich eine zügige Montage aufgrund der entfallenden Bauteile ergibt.

Wird der stutzenförmig ausgebildete Einsatz 44 mit entsprechender Fertigungsgüte gefertigt, so ist auch der Übergang in den Bodenbereich 52 beziehungsweise den in diesem ausgebildeten Hohlraum 58 unmittelbar bei der Montage, d. h. beim Fügen der Gehäuse 12 der elektrischen Maschine 14 einerseits mit dem Gehäuse der Leistungselektronik 24 sowie mit dem den Hohlraum aufweisenden Bodenbereich 52 des Gehäuses der Leistungselektronik 24, ohne dass weitere Abdichtelemente erforderlich wären, möglich. Bei der Montage wird die Abdichtung der aufgezählten Komponenten erreicht.

Im Vergleich zu dem in den Figuren 1 und 2 dargestellten, externen Leitungsverlauf 32 der Kunststoffleitung 16 kann durch die erfindungsgemäß vorgeschlagene integrierte Kühlleitung 40 gemäß Ausführungsbeispiel in den Figuren 3 und 4 extern am Gehäuse 12 Bauraum eingespart werden. Dadurch wiederum vergrößert sich die Einbauvarianz des gesamten E-Achsen-Moduls 10, da an der Außenseite des Gehäuses 12 kein zusätzlicher Platzbedarf für den externen Leitungsverlauf 32 der Kunststoffleitung 16 vorzuhalten ist. Dadurch baut das erfindungsgemäß vorgeschlagene E-Achsen-Modul 10 kompakter.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Gehäuse (12) eines E-Achsen-Moduls (10) eines elektrisch angetriebenen Fahrzeugs, wobei das E-Achsen-Modul (10) eine elektrische Maschine (14) und eine Leistungselektronik (24) umfasst, die über einen Kühlkreislauf gekühlt sind, **dadurch gekennzeichnet, dass** das Gehäuse (12) eine integrierte Kühlleitung (40) umfasst, über welche ein Kühlmedium zwischen dem Gehäuse (12) und der Leistungselektronik (24) zirkuliert.

2. Gehäuse (12) gemäß Anspruch 1, **dadurch gekennzeichnet, dass** die integrierte Kühlleitung (40) aus einer Gehäusewand (22) des Gehäuses (12) abzweigt und zu einem Anschlussende (42), das Teil des Gehäuses (12) ist, unterhalb der Leistungselektronik (24) verläuft.

3. Gehäuse (12) gemäß den Ansprüchen 1 und 2, **dadurch gekennzeichnet, dass** das Anschlussende (42) topfförmig ausgeführt und von einer Wandung (46) begrenzt ist, die einen Einsatz (44) aufweist.

4. Gehäuse (12) gemäß den Ansprüchen 1 bis 3, **dadurch gekennzeichnet, dass** der Einsatz (44) als Stutzen ausgeführt ist, dessen Stirnseite in einen Bodenbereich (52) eines Gehäuses der Leistungselektronik (24) hineinragt.

5. Gehäuse (12) gemäß den Ansprüchen 1 bis 4, **dadurch gekennzeichnet, dass** der Einsatz (44) eine Umlaufnut (48) aufweist, in der ein Dichtring (50) aufgenommen ist.

6. Gehäuse (12) gemäß den Ansprüchen 1 bis 5, **dadurch gekennzeichnet, dass** im Bodenbereich (52) eines Gehäuses der Leistungselektronik (24) ein Hohlraum (58) ausgeführt ist, durch den Kühlmedium zirkuliert.

7. Gehäuse (12) gemäß den Ansprüchen 1 bis 6, **dadurch gekennzeichnet, dass** das Anschlussende (42) der integrierten Kühlleitung (40) den Bodenbereich (52) des Gehäuses der Leistungselektronik (24) abstützt.

8. Verwendung des Gehäuses (12) gemäß einem der Ansprüche 1 bis 7 im E-Achsen-Modul (10) eines elektrisch angetriebenen Fahrzeugs.
